# EUROPEAN PATENT APPLICATION

(11) **EP 3 605 370 A2**
(43) Date of publication of application: **05.02.2020**
(21) Application number: 18772368.9
(22) Date of filing: 21.03.2018
(51) Int. Cl.: G06F 21/10, H04N 21/43

(54) **METHOD AND SYSTEM FOR MONITORING PLAYBACK OF MEDIA CONTENT, INCLUDING ITEMS COVERED BY COPYRIGHT**

(30) Priority: 23.03.2017 RU 2017109665
(71) Applicant: Obschestvo S Ogranichennoy Otvetstvennostiyu "Bubuka", Tomsk 634009 (RU)
(72) Inventor: PANGAEV, Dmitrij Viktorovich, Tomsk 634009 (RU)
(74) Representative: Jeck, Anton
(86) International application number: PCT/RU2018/000173
(87) International publication number: WO 2018/174752

(57) **Abstract**

The method and system relate to providing media content to users. The method for monitoring playback of media content, including copyrighted items, is based on the use of media content by operator servers and the provision of said content to users for playback, and the setting of viewing parameters, wherein each user plays back media content via operator servers providing media content, each of which contains a database of media content and data about the corresponding holders of copyrighted media content; when each user plays back media content, information containing the metadata of the media content and user data is sent to a parent server, a comparison is made of the media content played back by each user, together with its corresponding metadata, and the metadata of said media content sent to the parent server, and if the two do not match, the unauthorized use of media content is registered.

## Description

### FIELD OF THE INVENTION

The present invention relates to providing user access to media content and can be used to playback and control use of intellectual property assets by an unlimited number of users over the Internet.

### BACKGROUND OF THE INVENTION

Known methods of transmission and playback of information, such as video boards, advertisement billboards which are used to broadcast audio and /or video content cannot provide playback audio and/or video content promptly (a technician has to visit, or be present on site), as they call for content downloading and playback devices directly at the points of sale, use storage devices such as flash cards, CD/DVD and cannot store large amounts of data, require ongoing data overwriting if the content type needs to change. Other drawbacks of the known systems are high expenses for hardware and software for operating the information playback systems, and the necessity of protracted resolution of issues related to the legality of the content (obtaining permissions from authors and right holders to playback content). An additional drawback of the known content playback methods is lack of downloading and transmission over the Internet.

Known is a method of media file network transmission (RU2189119, published September 10, 2002) in which the provider computer divides the media files in a pre-defined sequence into a sequence of encrypted files to be transmitted in a pre-defined sequence over the network to the receiving computer. A downloadable client application is stored on the provider computer and is also transmitted over the network to the receiving computer along with the files of all types constituting the content of the message. The received files can then be played back on the receiving computer in the exact sequence.

However, this method of transmission is sufficiently complicated to implement and it limits the user in the selection of the media content. Besides, the method does not provide for control of intellectual property rights.

Known is a method of playing back digital content in a content protection system in accordance with multiple chain digital licenses (RU2378772, published January 10, 2010.)

That method enables playback of encrypted digital content on a computer in accordance with a chain license, the computer receiving a request for a playback of encrypted content. The chain has an end license for the content at one end of the chain, a core license at the other end, and all the intermediate licenses in between. The end license and all the intermediate licenses are linked to the adjacent license on the chain toward the core license while the core license is linked to the personal key owner (PR-U). Each license in the chain is verified to confirm that the license allows playback of the content. The decryption key is generated from the end license by applying the PR-U to the core license, the obtained key is used to decrypt the encrypted content for playback of the decrypted content.

However, this method is complicated for its sequential licensing and the encryption/decryption algorithms which limit a user in his or her optimal selection of the multimedia content. Besides, the method does not provide for control of the copyright rights.

Known is a method for multimedia data transmission (RU2518513, published June 10, 2014) in which a user registers certain content as available for access, and then a terminal automatically receives and stores that content. The content data are obtained from a predefined upload schedule, wherein the content is transmitted at a rate not synchronized with the playback rate. Then the content is checked for being a part of a mandatory content receiving service regardless of the user request. If yes, the data are described together with the content-related data as the first control data packet generated as the content to be transmitted over a pre-defined logical channel. Then the second control data packet serving to describe data for determining each logical channel within a physical channel is generated. The physical channels serves as a data link for transmitting a modulated broadcasting signal at a pre-defined frequency range. The first and second control data packages are multiplexed with the content; the data to be transmitted over the logical channels are also multiplexed as data to be transmitted over a single physical channel. The multiplexed data are modulated to be transmitted as a broadcasting signal.

In a known "Content Presentation System, Content Access Control Apparatus, Content Representation Method and Content Access Control Method" (RU2506635, published on February 10, 2014) a computer-enabled method receives the content and the metadata. The metadata are linked to multiple time marks within the content. The metadata are used to calculate playback parameters for a plurality of time mark. The content is delivered selectively based on the referenced linking.

A content delivery system with a content payback apparatus implementing the referenced method (RU2506635, published on February 10, 2014) contain a content server comprising a storage device coupled with a content data distribution module, a playback position identification module, a playback properties module, and a metadata download module connected in series. The storage device stores the content database and the content data.

The method and the content delivery system enable analysis of the content by utilizing such methods as soundtrack analysis and video track analysis. However, such analysis requires resource-intensive hardware while lacking control of use of intellectual property assets comprised in the content.

Known is a method of 'Digital Rights Management Apparatus and Method' (RU2504005, published on January 10, 2014.) It provides a method for automated copyright authorization on a device, a digital rights protection system, and a method of digital content delivery that mainly consists of an authorization agent embedded into the digital content. In contrast to a host copyright issuer, the agent verifies the authorization of the playback of the device prior to playing the digital content. If the device is not compatible, the authorization agent blocks access to the digital content. The technology of the invention manages digital rights in a stand-alone mode so an Internet access is not required and the technology can be used under a range of external conditions.

The closest to the claimed method and apparatus is the method and apparatus presented in the description of patent (RU82356, published on April 20, 2009).

In the referenced patent the control system of transferring of intellectual property assets on the Internet has a data server (DS) - a digital content vendor server, an end user server (EUS), an access server (ACS) - an Internet gate owned by the Internet provider, and a data control server (DCS) that calculates a hash function of the files under control. The DS output is connected to the ACS input over the Internet. The ACS is connected to the EUS over a LAN. The ACS output is connected to the DCS input over the Internet. The system also has a protocol filtering server (PFS) and an authentication server (ATS) connected to the ACS over a LAN. The DCS supports key escrow.

The method for controlling (RU82356 published April 20, 2009) implemented by the access control system operates by hashing the monitored multimedia files and authorizing user access only if the file hash value provided by the authorization server matches the hash value stored on the data control server. Intellectual property assets are identified in a stream of digital multimedia by extracting audio fingerprints identical to those previously received and loaded on to the data control server.

However, the referenced method and system cannot control access to each intellectual property asset simultaneously by multiple users, the number of access attempts, geography of the playbacks, as well as commercial and public use of the intellectual property assets. The rights holders are not notified in each instance of such use.

### SUMMARY OF THE INVENTION

It is the main object of the claimed embodiments of invention to expand the range of means and methods of controlling playback of the multimedia content having intellectual property assets, such as copyrighted and related rights assets.

It is also an object of the invention to develop a method and an apparatus for providing a copyright and related rights compliant playback of multimedia content, controlling user access to the multimedia content with intellectual property assets, and providing the rights holder with reports on usage of their IP assets.

The technical result of the embodiments of invention is the implementation of the claimed method and system.

The referenced problem is solved by playing back media content from the provider data servers comprising generated required content (audio and video information) and a database of the corresponding rights holders of the intellectual property assets in the multimedia content in the context of a known method of playing back of the multimedia content with intellectual property assets by the providers, providing the content to the users, logging and controlling the parameters of the playback media content. As the content is accessed, a notification is sent to the main server and the rights holder regarding the played back content while the multimedia content delivered by the provider to the main server and the accessed content are checked. If a data track stored on the main sever does not match that of each multimedia content played back by each user, the rights holder is notified about an unauthorized use to the media content.

Optimally the server of the rights holder is configured to connect to the server of the provider and the main server.

It is preferable to send the data about the played back content to the rights holder after the content is uploaded to the end user devices.

It is advantageous to implement the provider severs capable of performing tasks of playing back the media content, selecting and playing back audio information, setting a schedule of transmitting multimedia content by the to a user playback device, ending transmission of the information from the server to the playback device, substituting the server-provided information with a relay, and disconnecting the playback device.

It is preferable to use a pre-installed media player on the play back devices.

It is also advantageous to save credentials of the users connected by the provider to WiFi.

The problem is also solved by using a main server for storing mate data of the media content coupled to the content playback devices and the provider servers in the context of a known system of controlling media content with intellectual property assets, he system having at least once provider server providing the media content and coupled to at least one media content playback device, and a device for verification and analysis coupled with the media content playback device. The device for verification and analysis serves to verify and compare the played back media content on each content playback device with the content metadata transmitted to the main server from a content playback device and a provider server.

The system may additionally comprise the servers of the rights holders connected to the main server.

It is preferable that the provider server has a storage device connected to the content distribution module, a playback position identification module connected in series with a playback properties module, a metadata transmission module, an I/O module. The outputs of the storage device, of the metadata transmission module, and of the I/O module are used as the provider server outputs, and the inputs of the storage device, of the playback position identification module, and of the I/O module are used as the provider server inputs.

The storage device can store a database containing the media content and the metadata including the information about the data related to the IP rights holders used in the media content, metadata of the IP assets, the data related to users of the content playback devices, and the media content.

Optimally the device for verification and analysis is a provider server identification module and a content playback device connected in series with a media content recording module, a comparator for comparing the played back multimedia content with the report submitted to the main server, and a violation detection module, wherein the comparator and the violation detection module outputs serve as outputs for the device for verification and analysis connected to the main server, and wherein the inputs of the provider server identification module and the content playback device, of the media content recording module, and of the comparator are used as inputs for the device for verification and analysis.

Preferably the content playback device is connected in series a user authentication module, a synchronization module, an I/O module, an encryption module, a storage device, a content playback device and a content playback notification module. The outputs of the synchronization module, the I/O module, the content playback module, the content playback notification module serve as the outputs of the content playback device, and the inputs of the synchronization module and the I/O module serve as the inputs of the content playback device.

The content playback device can be configured to connect to end user devices, such as speakers, headsets, or any other audio and video playback devices.

The claimed embodiments of the invention solve the problem and are connected by one inventive concept that ensures reliable playback control of the content having assets protected by copyright and related rights.

The above-mentioned advantages of the embodiments of the invention as recited by their claimed elements are explained in the preferred embodiments.

### BRIEF DESCRIPTION OF THE DRAWINGS

FIGURE is a block diagram of a media content playback system having IP assets in accordance with the reference list of designations of devices and system blocks.

### DETAILED DESCRIPTION OF THE PREFERRED EMBODIMENTS

A system for implementing the method comprises at least one provider server (1) that delivers the media content; each server includes a storage device (2) connected to a content distribution module (3), a playback position identification module (4) with its output connected to a playback properties module (5) wherein its input serves as an input of the server (1) connected an output of a synchronization module (17) of a content playback device (14). The storage device (2) is also connected to a main server (8) that stores media content access logs, and to the content playback device (14). The input of a metadata upload module (6) of the provider server (1) is connected to the output of the playback properties module (5), the outputs of the metadata upload module (6) are connected to an I/O module (7) and, via the output of the provider server (1), to the input of the synchronization module (17) of the content playback device (14). One of the inputs of the I/O module (7) is also connected to the output of the content distribution module (3). Also, the I/O module (7) is connected by a bus to a data receiving module (18) of the content playback device (14).

The main server (8) for storing content access logs is connected to identification module (10) of the provider server and of the content playback device within the verification and analysis device (9) that can verify and compare the content accessed by the content playback device (14) to the logs uploaded to the main server (8). The provider server identification module (10) and the content playback devices are connected in series to the media content recording module (11), the comparator (12) and the violation detection module (13) with its output serving as the output of the verification and analysis device (9) connected to the main server (8). The comparator (12) of the verification and analysis device (9) is also connected to the main server (8) via a bus.

The content playback device (14) of the claimed system has a user authentication module (16) connected to the synchronization module (17) having its inputs connected to the outputs of the provider server (1) serving as the outputs of the playback position identification module (4) and of the metadata upload module (6).

Furthermore, the content playback device (14) has an I/O module (18) connected in series to an encryption module (19), the storage device (15), a content playback module (20), and a content access notification module (21). The encryption module (19) is also connected to the content playback module (20). An output of the content access notification module (21) is one of the outputs of the content playback device (14) and is combined with the inputs of the storage device (2) of the provider server (1) and with the main server (8). One of the outputs of the content playback module (20) is connected via the output of the content playback device (14) to one of the inputs of the multimedia content recording module (11) of the verification and analysis device (9). The main server (8) is also connected to a server of the rights holder (22).

The claimed method is embodied as a media content playback control system, the media content having intellectual rights assets, as follows.

Media content uploaded by its rights holder is stored on the provider servers (1). Each server stores the necessary content (audio and video files), a database of the media content and of the information of the respective rights holders (name, contact details, etc.) for the media content stored on the storage device (2). The information about the rights holders of the intellectual property rights is entered into the database stored on the storage device (2) of the server (1) after the owners of each server (1) and the rights holders enter into a contract. The provider servers (1) are configured to store media content and structure the content, to store the content metadata, the registered rights holders, users and content playback devices, and to select and playback audio and video files, to form a media playback schedule on the content playback device (14) selected by a user, to transmit media content to a playback device, to cancel transmission of information by the server to the playback device (14), to substitute the information provided by the server (1) to the content playback device (14), to turn off the content playback device (14), and to store media content playback logs.

The media content uploaded by the rights holder or its representative via a web interface to the storage device (2) is pre-moderated. After the media content is uploaded, it is verified by an operator of the server (1). The operator monitors the uploaded content, finds the information about the rights holder, compares the information to those listed in the contract, and enters the information about the status of the media content (approved/rejected) into the content distribution module (3) of the provider server (1), thus, confirming the ownership of the intellectual asset by the proper rights holder.

To playback the multimedia content on a specific content playback device (14), specialized software is installed on the device. Each of the content playback devices (14) is registered, and the data about a user (owner of the playback device) are entered into the database of the storage device (2) of the provider server (1). The user data include the company name and contacts, the address and floor space of the premises where the content is played, and other user details. After the data are registered, the user is issued a unique alphanumeric code for authorization of the content playback device, the code being stored on the storage device (2). The referenced code is sent to the playback position identification module (4) and transmitted to the content playback device (14) from an output of the module (4) via the synchronization module (17) to the user authentication module (16).

The storage device (2) of the provider server (1) is connected to the content distribution module (3). The module creates structured catalogs of the multimedia content grouped by music style, business areas, as well as play lists as customized by a user of the content playback device (14), for example, in accordance with the user's personal account. As the content playback device (14) is started, in a period pre-defined in the settings of the device (14) (for example, over 30 minutes) the output of the synchronization module sends to the provider server (1) the unique alphanumeric code, for example, FDbburj556kif, which arrives in module (4) of the playback position identification of server (1) which allows to identify the content playback device, or reject the connection if the unique user code does match the code stored in the database on the provider server (1). The content playback device (14) is set up individually for a specific location (a cafe, a club, a mall level, a cafe/restaurant room as specified in the contract) where the content will be played back and has speakers, an amplifier, and a computer that runs dedicated software.

The playback position identification module (4) of the server (1) unambiguously identifies each specific content playback device (14) in accordance with the corresponding unique alphanumeric code being a user ID (for the device (14)). Then the ID and the user-defined playback properties (time/volume, content play list) are forwarded to the playback properties module 5 determining properties of the media content playback in accordance with the used-defined properties.

The determined properties of the playback of the media content having intellectual property assets are sent from the output of module 5 to the metadata upload module 6. Module 6 generates a configuration file for each content playback device 14. One user may have multiple content playback devices 14 with an XML file generated for each of the playback devices, the XML file containing all the necessary information about the media content, such as time/volume, address and play list for each content type (music, video/photo, commercials).

The configuration file is forwarded from the output of the metadata upload module (6) of the provider server (1) to the input of the synchronization module (17) of the content playback device (14) and to the I/O module (7) of the provider server (1) where the media content received from the output of the content distribution module (3) is stored, and then to the I/O module (18) of the content playback device (14). Based on the information in the configuration file, the I/O module (18) requests specific media content from the provider server (1) via the I/O module (7). As the media content is uploaded to the content playback device (14), the information is sent to the encryption module (19) via the I/O module (18).

The encryption module (19) encrypts the information according to a certain algorithm, for instance, using bit inversion (presented, in particular, in reference: https://ru.wikipedia.org/wiki/%D0%91%D0%B8%D1%82%D0%BE%D0%B2%D1%8 B%D0%B5_%D0%BE%D0%BF%D0%B5%D1%80%D0%B0%D1%86%D0%B8%D0 %B8#.D0.98.D1.81.D0.BA.D0.BB.D1.8E.D1.87.D0.B0.D1.8E.D1.89.D0.B5.D0.B5_.C 2.AB.D0.98.D0.9B.D0.98.C2.BB_.28XOR.29) preventing playback of the media content outside the claimed system. The encrypted media content is stored in the storage device (15) of the content playback device (14). Encrypted media content is preliminarily decrypted before being played on the module (20) with the same encryption module (19) (based on the double bit inversion), and as a result, the original file suitable for playback is played back by module (20) of the content playback.

At each playback of the content playback module (20), the information from its output arrives at the playback notification module (21) and then from its output via the output of the content playback device (14) the information in a pre-defined format is sent to the input of the main server (8). The pre-defined format comprises a playback date, time, the name of the rights holder, location, a content playback device ID. Besides, that information is also sent to the input of the storage device (2), of provider server (1), and to the input of the media content recording module (11) of the verification and analysis device (9).

The main server (8) is a storage of data of media content playback logs which receives and stores the data from all the provider servers (1), the data being, in particular: a provider server ID, a content playback device ID, a media content track ID, a playback date, time.

The functionality of the main server (8) also includes registering the information in a specified format received the providers, making it possible to quickly locate and forward the data to the verification and analysis device (9) to compare the played back media content to the log information about the content sent to the main server.

All the data received by the main server (8) from the provider servers (1) are received from the output of the server (8) to the verification and analysis device (9), to the provider server identification module (10), and to the content playback device receiving a list of providers from the main server (8) from a pre-compiled database, as well as receiving a list of the content playback devices (14) registered with the providers.

The verification and analysis device (9) can be implemented as a smartphone application for Windows, Android, iOS. The application records media content (e.g., a melody, other sound information, such as an audio fragment) played by the built-in microphone of the content playback devices (14). The media content received by the content playback module (20) to the module (11) is verified and analyzed by the comparator (12) to determine a "melody signature" based on a spectrogram establishing a spectral density of the signal vs. time, meaning that a musical work is represented as a frequency vs. time graph, a spectrogram.

The generated spectrogram is compared to the database of "signatures", for example, on Shazam or similar systems in order to get the track metadata, such as its title, the songwriter, and the performer.

The audio "fingerprint" comparison technology is known (for example, refer to https://www.ee.columbia.edu/∼dpwe/papers/Wang03-shazam.pdf), according to which present invention embodies the following stages:
1. A music fingerprint database is pre-populated and stored on the storage device (2).
2. A user "checks" the song for which a fingerprint of the song's 10 second sample is generated.
3. The application sends the fingerprint to Shazam to search the correspondence in its database.
4. If a match is found, the information about the song is presented to the user, otherwise an error is generated.

The comparator (12) is intended to compare the played media content to the log sent to the main server, the comparator also receives from the main server (8) a list of the media content played on each playback device (14) based on the uploaded provider/content playback device IDs for a specified period, and compares the data to the media content recorded by the device (11) played by the content playback device (14).

After a track is saved by the media content recording module (11) and the metadata are determined, the played back media content comparator (12) of the verification and analysis device (9) requests from the main server (8) a list of the media content played during a selected time interval by a specific playback device (14) connected to a specific provider server (1). The list of the provider IDs stored on the main server (8) is complemented with metadata, for example about the rights holder and the media content IP asset of the media content stored in the storage device (2) of the provider server (1). Besides, the main server (8) stores a list of the track IDs, content playback device IDs, provider IDs received from the access notification module (21). If required, the main server (8) queries the storage device (2) of the provider server (1) which stores the content metadata (track name, rights holder's name), the object data (name, address, floor space), and adds the data to the list requested by the comparator (12) of the verification and analysis device (9) during controlling the playback.

Thus, the comparator (12) compares the metadata of a track identified by the module (11) to the metadata on the list uploaded to the module (10) from the main server (8), and to the data list uploaded to the module (12) via a bus connecting the main server (8) and the module (12).

Comparison is done using words in the title of a song and the name of the songwriter. If the words match regardless of their order, for example, Yury Antonov of Antonov Yury in the songwriter's name and the title of a song, the module (12) confirms the match. A match is declared if the similarity no less than 50%.

The played back media content comparator (12) sends a message via the output of the verification and analysis device (9) to the main server (8) notifying that the track being played matches the one logged to the main server (8) by the access notification module (21) of the device (14). If the metadata (the text part) do not match (they differ by 50% or more), the module (12) sends a message to the violation detection module (13). From its output, a message about a mismatch between the played media content metadata and the logged metadata is sent to the main server (8). The main server (8) receives information reflecting the particulars of the infringed IP asset in the media content. The main server (8) can send a notification about violation of specific IP rights to the server (22) of the rights holder. Therefore, the verification and analysis device (9) checks if the User (a content playback device located in a cafe, restaurant etc.) violates the rights of the copyright holders or the owners of the servers (1) who have been granted the right to exploit IP assets under a contract with the copyright holder. The device (9) can be software installed on the content playback device (14), as an application in a smartphone and another playback device.

When there is a mismatch, e.g. a recorded track is not found on the track list stored by the main server (possible inaccuracies in the stored metadata, e.g. StasMihailov and Stas Mikhailov), an extra verification step can be performed by a controlling party by additionally playing back and analyzing compared metadata, or by manual search,

Server (22) of the rights holder (author) can be connected to the main server (8) via a pre-installed application. The rights holder can create an account on the main server (8) by confirming the rights to certain multimedia content and informing which providers has entered into contracts with the rights holder, making it possible to compare the logs of the operators of server (1) which serve as a basis for paying royalties to the rights holders, to the logs sent to the main server (8) by the operators of server (1).

The claimed multimedia content access control system can manage remuneration payments to the multimedia content IP copyright holders. The payment information is sent by the content access devices (14) to the main server (8).

The rights holder can receive the honorarium based on a smart contract with an operator using the blockchain technology.

The blockchain technology is well-known and available in public sources: https://ru.wikipedia.org/wiki/%D0%A6%D0%B5%D0%BF%D0%BE%DI%87%D0%BA %D0%B0%D0%B1%D0%BB%D0%BE%D0%BA%D0%BE%D0%B2_%D1%82%D1 %80%D0%B0%D0%BD%D0%B7%D0%B0%D0%BA%D1%86%D0%B8%D0%B9 http://rb.ru/opinion/blockchain/

To generate an honorarium payment, the rights holder and the server owners create cryptocurrency wallets (such as Ethereum ETH or Bitcoin BTC), and register their smart contracts at a platform operating as a decentralized blockchain virtual machine (e.g., Ethereum). The rights holders should register a Rights Holder-Provider contract specifying the payment terms.

In accordance with the results of the playback of the media content including, for example, copyright or derivative rights, and in accordance with the contract, the rights holders receive funds in cryptocurrency from the server owner wallet in the amounts specified in smart contracts.

Using financial settlements in accordance with the described technology enables the rights holder to receive the payments in accordance with a provider's smart contract. Based on that guaranteed amount, the rights holder is paid in accordance with the operator's internal exchange rate: cryptocurrency (ETH/BTC) - national currency (RUB, USD, Euro).

The above-described preferred embodiments of the present invention are not limited in scope and extend to any modifications encompassed by equivalent elements. The claimed invention can be widely used to playback and control the playback of IP assets over the Internet for an unlimited number of users, and reliably protect the rights of the IP rights holders to the media content.

System symbols page for Figure.
1. Servers of providers distributing media content, each of the servers have:
2. a storage device;
3. a content distribution module;
4. a playback position identification module;
5. a playback properties module;
6. a metadata upload module'
7. an I/O module;
8. A main server for storing media content access logs;
9. A verification and analysis device serving to verify and compare the played media content to the log uploaded to the main server, the device having:
10. a provider/content playback device identification module;
11. a multimedia content recording module;
12. a comparator that compares the played multimedia content and the logs sent to the main server;
13. a violation detection module;
14. A content playback device having:
15. a storage device;
16. a user authentication module;
17. a synchronization module;
18. an I/O module;
19. an encryption module;
20. a content playback module;
21. an access notification module;
22. a rights holder server.

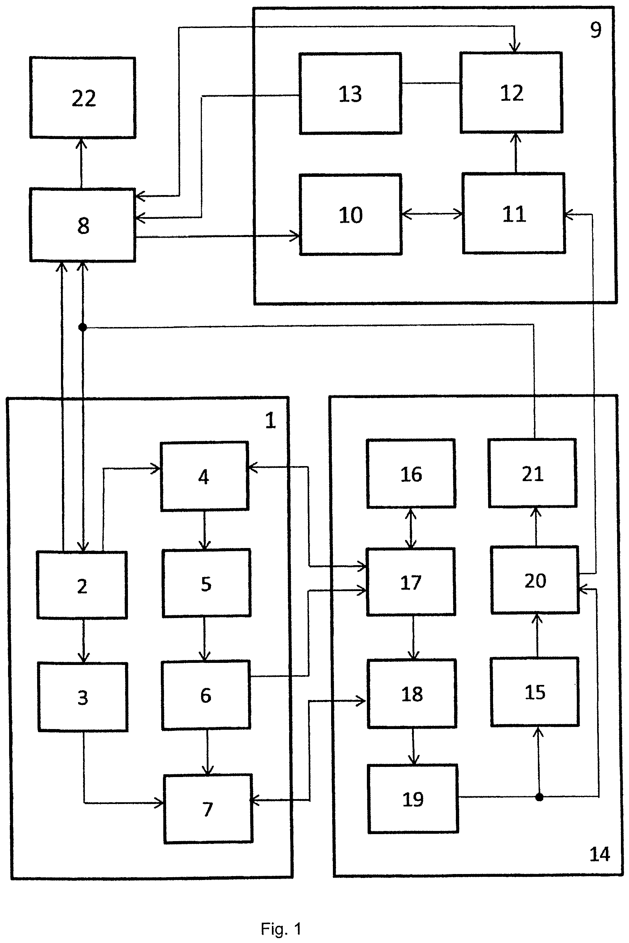

## Claims

1. A method of controlling playback of media content having intellectual property assets, the method comprising:
using the media content by provider servers and making the media content available to users for playback and for recording playback logs;
using the provider servers for playing back the media content by the users;
generating a database of the media content and of data of rights holders of the intellectual property assets in the media content;
during playback of the media consent by each of the users, sending media content metadata and user information to a main server;
comparing the multimedia content and the media content metadata played back by each of the users to the media content metadata uploaded to the main server; and
registering an unauthorized use of the media content if a mismatch is determined.

2. The method of claim 1, further comprising coupling the provider servers to the main server.

3. The method of claim 1, further comprising sending data about the played back media content to the rights holder after sending the media content to the users,

4. The method of claim 1, wherein the provider servers are configured to play back the media content to the users, select and play audio and video files, set up multimedia content uploads to a user-specified relay server, stop transmitting of information from a server to the relay server, substitute the information transmitted from the server to the relay server, turn off the relay server.

5. The method of claim 1, further comprising installing a preinstalled application on users' devices for paying back the media content.

6. The method of claim 1, further comprising registering smart contracts between the rights holders and the providers on a blockchain-enabled platform.

7. The method of claim 1, further comprising sending payments to the rights holders after the media content is played back, the payments being a cryptocurrency payment from a wallet of the server provider in amounts in accordance with smart contracts.

8. A system of controlling playback of media content having intellectual property assets in accordance with claim 1, the system comprising:
at least one provider server providing the media content coupled to at least one media content playback device;
a verification and analysis device coupled to content playback devices; and
a main server for storing media content metadata, the main server coupled to the content playback devices and to the provider servers; wherein
the verification and analysis device is configured to verify and compare the multimedia content and the media content metadata played back by each of the users to the media content metadata uploaded to the main server from a content playback device and from the provider server.

9. The system of claim 8, further comprising servers of the rights holders coupled to the main server.

10. The system of claim 8, wherein the provider server further comprises:
a storage device coupled to a content distribution module;
a playback position identification module connected in series to a playback properties module;
a metadata download module;
an I/O module;
wherein outputs of the storage device, of the metadata upload module, and of the I/O module serve as outputs the provider server, and wherein inputs of the storage device, of the playback position identification module, and of the I/O module serve as inputs of the provider server.

11. The system of claim 8, wherein the storage device stores a database of the media content metadata comprising data of rights holders of the intellectual property assets in the media content, metadata of the intellectual property assets, data of the users of the content playback devices and the media content.

12. The system of claim 8, wherein the verification and analysis device comprises:
an identification module of the provider server of the content playback device connected in series with a multimedia content recording module;
a comparator for comparing played back media content and a log submitted by a violation detection mod to the main server; wherein
outputs of the comparator and the violation detection module serve as inputs of the verification and analysis device connected to the main server, and wherein inputs of the identification module and the content playback device, of the media content recording module, and of the comparator serve as inputs of the verification and analysis device.

13. The system of claim 8, wherein the verification and analysis device comprises:
connected in series a user authentication module, a synchronization module, an I/O module, an encryption module, a storage device, a content playback module, and an access notification module;
wherein outputs of the synchronization module, of the I/O module, of the content playback module, of the access notification module serve as outputs of the content playback device, and wherein inputs of the synchronization module and the I/O module serve as inouts of the content playback device.

14. The system of claim 8, wherein the content access device is configured to connect to end user devices in a form of a speaker, headset, or any audio and video playback device.
